# EUROPÄISCHE PATENTSCHRIFT

(11) **EP 3 684 695 B1**
(45) Veröffentlichungstag und Bekanntmachung des Hinweises auf die Patenterteilung: **11.08.2021**
(21) Anmeldenummer: 18766209.3
(22) Anmeldetag: 06.09.2018
(51) Int. Cl.: B65B 3/02, B29C 49/42, B65B 9/24

(54) **VORRICHTUNG ZUM HERSTELLEN UND BEFÜLLEN VON BEHÄLTERN**
DEVICE FOR MANUFACTURING AND FILLING CONTAINERS
DISPOSITIF DE FABRICATION ET DE REMPLISSAGE DE RECIPIENTS

(30) Priorität: 20.09.2017 DE 102017008802
(43) Veröffentlichungstag der Anmeldung: 29.07.2020
(73) Patentinhaber: Kocher-Plastik Maschinenbau GmbH, 74429 Sulzbach-Laufen (DE)
(72) Erfinder: KÖPPEL, Karl, 73492 Rainau (DE); SCHRECKENHÖFER, Manfred, 74429 Sulzbach-Laufen (DE); SCHNEIDER, Sven, 73453 Abstgmünd (DE); KIRCHMAIER, Dmitri, 74423 Obersontheim (DE); BRENNER, Klaus-Peter, 73527 Schwäbisch Gmünd (DE)
(74) Vertreter: Bartels und Partner, Patentanwälte
(86) Internationale Anmeldenummer: PCT/EP2018/073935
(87) Internationale Veröffentlichungsnummer: WO 2019/057499

(56) Entgegenhaltungen:
- EP-A2- 0 361 123
- WO-A1-2009/152979
- DE-A1-102007 015 078

## Beschreibung

Die Erfindung betrifft eine Vorrichtung zum Herstellen und Befüllen von Behältern mit den Merkmalen im Oberbegriff von Anspruch 1.

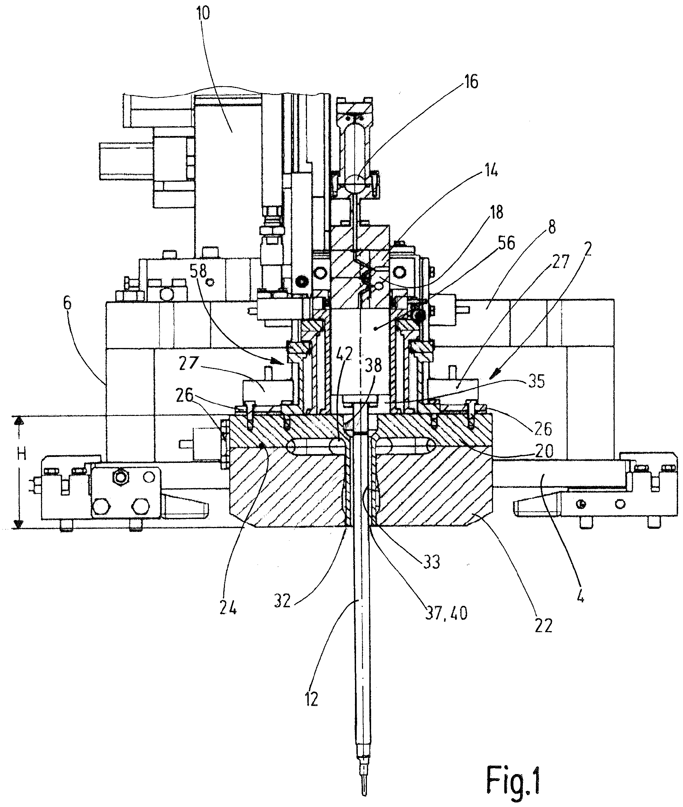

Vorrichtungen dieser Art sind Stand der Technik. Das Dokument WO 2009/ 152979 zeigt eine nach dem bekannten bottelpack®-System arbeitende Vorrichtung, die ein automatisiertes Formen (Blasen oder Vakuumformen), Füllen und Verschließen von Behältern auf wirtschaftliche Art und Weise ermöglicht. Insbesondere können damit vor der eigentlichen Behältererzeugung Polymerschläuche hergestellt werden, die sich durch sehr homogene Wandstärkenverteilungen auszeichnen, was wiederum Bedingung für sehr homogene Wandstärkenverteilungen der später resultierenden befüllten und verschlossenen Behälter ist. Wesentlich hierfür wiederum ist gemäß dem Stand der Technik eine hohe Bauform des Extrusionskopfes, die eine Homogenisierung der Kunststoffschmelze in den schmelzeführenden Kanälen, insbesondere den senkrecht, d.h. parallel zum Fülldorn, verlaufenden Kanälen ermöglicht. Aufgrund dieser Gegebenheiten ist für die bekannten Vorrichtungen dieser Art in den Fertigungsräumen ein erheblicher Einbauraum erforderlich. Wie in dem genannten Dokument gezeigt und wie insbesondere aus deren Fig. 1 ersichtlich ist, ergibt sich ein hoher Raumbedarf in Vertikalrichtung, ausgehend von einer unteren Formeinrichtung, über der sich ein den Extrusionskopf umgebender Grundrahmen befindet, auf dem wiederum eine vertikale Dornhalterung aufgebaut ist, an der die Fülleinrichtung mit den jeweiligen Fülldornen in Vertikalrichtung einstellbar verfahrbar gelagert ist. Aus der notwendigen Höhe des Extrusionskopfes ergeben sich entsprechend lange Fülldorne, die, um präzise Bewegungen zu ermöglichen, Führungen innerhalb des Extrusionskopfes notwendig machen. Dies wiederum ist für die bei der Abfüllung medizinischer Füllgüter vorgeschriebene Umspülung der Fülldorne mit Sterilluft nachteilig, da Führungsbuchsen oder Luftlager die gewünschte laminare Gasströmung stark beeinträchtigen können.

Die EP 0 361 123 A2 beschreibt eine Vorrichtung zum Herstellen und Befüllen von Behältern, bei der zumindest ein Schlauch plastifizierten Kunststoffmaterials, der aus einem Extrusionskopf kommt, in eine geöffnete Form hinein extrudierbar ist, wobei mittels einer Fülleinrichtung, zumindest das Füllgut in den jeweiligen Behälter mittels Fülldornen einbringbar ist, die zumindest im Betrieb den Extrusionskopf entlang mindestens einer Reihe von Durchlässen durchgreifen, wobei der Extrusionskopf eine quaderförmige Schale aufweist und wobei die Bauhöhe des Extrusionskopfes parallel zur Ausrichtung des jeweiligen Fülldornes gesehen kleiner ist als die Länge des Extrusionskopfes längs der jeweiligen Reihe der Durchlässe gesehen.

Im Hinblick auf diese Problematik stellt sich die Erfindung die Aufgabe, eine Vorrichtung dieser Gattung zur Verfügung zu stellen, die sich insbesondere auszeichnet durch
- die Extrusion eines Kunststoffschlauches mit homogener Wanddickenverteilung;
- einen verringerten Bedarf an Einbauraum, insbesondere Raumhöhe; und
- eine ungestörte Sterilluftführung.

Erfindungsgemäß ist diese Aufgabe durch eine Vorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass die quaderförmige Schale aus mindestens einem unteren und einem oberen Schalenteil besteht, von denen zumindest ein Schalenteil eine Kanalführung für das plastifizierte Kunststoffmaterial aufweist, die einen Ringraum beinhaltet, in dessen Mitte ein Aufnahmesteg angeordnet ist, der einzelne Längsaufnahmen in Form der Durchlässe für den Durchgriff der jeweiligen Fülldorne aufweist.

Diese Fülldorne sind, wie bei derartigen Vorrichtungen üblich, in einer geraden Reihe angeordnet und erstrecken sich beim vorliegenden Ausführungsbeispiel längs der Langseiten der quaderförmigen Schale, wobei eine durchgehende Reihe von einzelnen, voneinander benachbarten Durchlässen für zwölf Fülldorne im Aufnahmesteg vorgesehen sind. Die derart aufgebaute Gesamtschale bildet die flache Schale als Ganzes aus.

Es ist ferner vorgesehen, dass der Extrusionskopf eine quaderförmige Schale aufweist und dass die Bauhöhe des Extrusionskopfes parallel zur Ausrichtung des jeweiligen Fülldorns gesehen kleiner ist als die Länge des Extrusionskopfes längs der jeweiligen Reihe der Durchlässe gesehen. Die Ausbildung des Extrusionskopfes als flache Schale ermöglicht eine entsprechende Verringerung der Höhe des den Extrusionskopf umgebenden Grundrahmens, der die Basis für den Aufbau der darüberliegenden weiteren Vorrichtungseinheiten bildet, so dass sich insgesamt eine wesentliche Verringerung der Gesamt-Bauhöhe der Vorrichtung und ein entsprechend verringerter Bedarf an Einbauraum der Vorrichtung ergeben. Die Angabe "quaderförmig" bezieht sich auf die Grundkonstruktion der flachen Schale, die Anbauten aufweisen kann, die Abweichungen von der reinen Quaderform mit sich bringen können. Die Abweichungen können auch aus Abflachungen, Abrundungen, Schrägen etc. am quaderförmigen Grundkörper bestehen.

Die flache Schale ist aus zwei Schalenteilen gebildet, die als oberes und unteres Schalenteil entlang einer gemeinsamen Trennebene mit ihren einander zugewandten Stirnseiten in Anlage miteinander sind. Die vorzugsweise horizontal verlaufende Trennebene verläuft dabei senkrecht zu dem jeweiligen, vorzugsweise vertikal, verfahrbaren Fülldorn. Ferner haben die Schalenteile jeweils für sich gesehen eine flache Quaderform.

Der Extrusionskopf nach der Erfindung dient dem Extrudieren eines zur Umgebung hin geschlossenen ringförmigen Schlauches, der steril ausgeführt ist. Mit der Erfindung ist eine laminare Sterilluftführung erreicht sowie die führungsfreie Anordnung der Fülldorne im Extrusionskopf.

Vorzugsweise ist dabei die Kanalführung mit ihren Einzelkanälen durch beide Schalenteile gebildet. Besonders bevorzugt ist vorgesehen, dass der jeweilige Kanalquerschnitt hälftig durch die anteilige Kanalführung in jedem Schalenteil gebildet ist.

Erfindungsgemäß ist der Ringraum von mindestens zwei Versorgungskanälen mit dem plastifizierten Kunststoffmaterial versorgbar, wobei diese Versorgungskanäle hierfür mit ihrem einen freien Ende in den Ringraum und mit ihrem anderen freien Ende in einen Zuführkanal einmünden, der senkrecht auf den Versorgungskanälen steht.

Die Anordnung kann mit Vorteil so getroffen sein, dass der Zuführkanal Teil einer Zuführeinrichtung ist, die auf einen sich über eine Schmalseite der Schale erstreckenden Endbereich eines oberen Schalenteils aufgesetzt ist und die das obere Schalenteil zumindest teilweise überdeckt.

Die Zuführeinrichtung ist mit ihrem einen freien abgewinkelten Ende an eine Zentralversorgung eines Extruders anschließbar, der das plastifizierte Kunststoffmaterial zur Verfügung stellt.

Bei vorteilhaften Ausführungsbeispielen nimmt der Zuführkanal in der Zuführeinrichtung in der Art eines Fallrohres die Versorgung der Versorgungskanäle mit plastifiziertem Kunststoffmaterial vor.

In einer besonderen Ausführungsform kann die Anordnung derart getroffen sein, dass die Versorgungskanäle vorzugsweise zangenartig den Ringraum zumindest teilweise umfassen und mit abgebogenen Endabschnitten in den Ringraum einmünden, wobei die beiden anderen freien Enden der Versorgungswege in eine gemeinsame Versorgungsstelle ausmünden, in die senkrecht der Zuführkanal der Zuführeinrichtung einmündet. Vorteilhaft kann jedoch die Zuführungseinrichtung auch so gestaltet sein, dass der Zuführkanal waagerecht in die Versorgungskanäle einmündet, was zu einer deutlichen Verkürzung der Fließwege des Kunststoffes führt.

Mit Vorteil können der Ringraum und die Versorgungskanäle gleichermaßen durch Ausnehmungen in beiden Schalenteilen gebildet sein, die von dem mittig und parallel zu den Längsseiten des Extrusionskopfes verlaufenden Aufnahmesteg mit den Durchlässen für die jeweiligen Fülldorne durchgriffen sind.

Bei vorteilhaften Ausführungsbeispielen ist der jeweilige Fülldorn mit einem radialen Abstand innerhalb der jeweils zuordenbaren Ausnehmung im Aufnahmesteg längsverfahrbar aufgenommen. Dank der flachen Bauweise des Extrusionskopfes kann auf die Führung der Fülldorne im Extrusionskopf und damit auf den die Sterilluft beeinträchtigenden Einbau von Dornführungsbuchsen, -lagern oder dergleichen, wie sie bei Extrusionsköpfen üblicher Bauweise erforderlich sind, verzichtet werden.

Der Extrusionskopf kann auf seiner Unterseite Schlauchabgabeöffnungen aufweisen, deren freier Querschnitt einstellbar ist und die der Abgabe des extrudierten Schlauches zu der jeweiligen Form für die Behältererzeugung dienen.

Die Angaben "senkrecht" und "waagerecht" beinhalten auch Ausführungen, die von diesem Richtungsverlauf geringfügig abweichen.

Nachstehend ist die Erfindung anhand eines in der Zeichnung dargestellten Ausführungsbeispiels im Einzelnen erläutert. Es zeigen:
- Fig. 1: einen abgebrochen gezeichneten, vertikalen Teilschnitt des Ausführungsbeispiels der erfindungsgemäßen Vorrichtung, wobei lediglich der dem Extrusionskopf benachbarte Vorrichtungsbereich dargestellt ist und der einzige sichtbare Fülldorn in der vorgeschobenen Füllposition gezeigt ist;
- Fig. 2: eine gegenüber Fig. 1 vergrößert gezeichnete perspektivische Schrägansicht des gesondert dargestellten Extrusionskopfes des Ausführungsbeispiels;
- Fig. 3: eine teilweise im Vertikalschnitt und größtenteils im Horizontalschnitt gezeichnete perspektivische Schrägansicht des Extrusionskopfes; und
- Fig. 4: eine im Horizontalschnitt gezeichnete perspektivische Schrägansicht einer besonderen Ausführungsform des Extrusionskopfes.

Die Fig. 1 zeigt von dem Ausführungsbeispiel der erfindungsgemäßen Vorrichtung lediglich die einem Extrusionskopf 2 benachbarten Vorrichtungsteile. Der Extrusionskopf 2 ist an einem Grundrahmen 4 gelagert, der mit vertikalen Trägern 6 und horizontalen Trägern 8 ein Vorrichtungsgestell bildet, das den Extrusionskopf 2 umgibt. Auf den oberen, horizontalen Trägern 8 des Grundrahmens 4 sind weitere Vorrichtungseinheiten aufgebaut, namentlich eine Dornhalterung 10, die sich, wie bei derartigen Vorrichtungen üblich, in säulenartiger Bauweise vertikal erstreckt (s. Fig. 1 des zum Stand der Technik genannten Dokuments) und an der die betreffenden Fülldorne 12 zusammen mit einer zugehörigen Fülleinrichtung 14 in Vertikalrichtung einstellbar verfahrbar sind. Die Fig. 1 zeigt die Fülldorne 12 in der vorgeschobenen Füllposition, in der sie sich in eine geöffnete Formeinrichtung erstrecken, die nicht dargestellt ist. Die Fülleinrichtungen 14 erhalten Füllgut von einer zentralen Füllgutleitung 16 her und weisen für jeden Füllraum 12 eine steuerbare Dosiereinheit 18 auf. Wie in dem Dokument

DE 10 2008 028 772 A1 beschrieben, geben die Dosiereinheiten 18 die für jeden Füllvorgang benötigte Dosismenge des Füllguts taktgesteuert an den inneren (nicht gezeigten) Füllkanal des jeweiligen Fülldorns 12 ab.

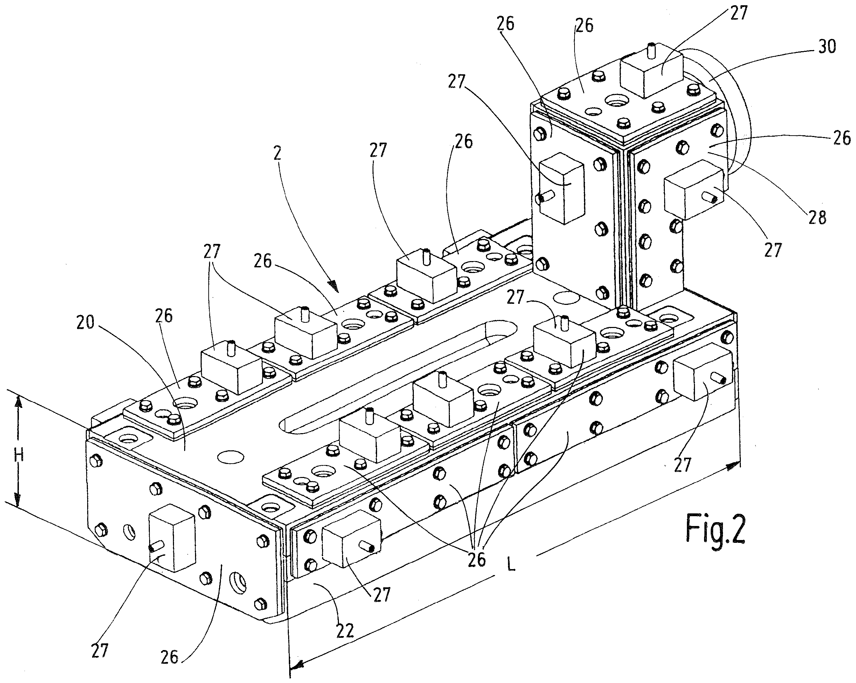

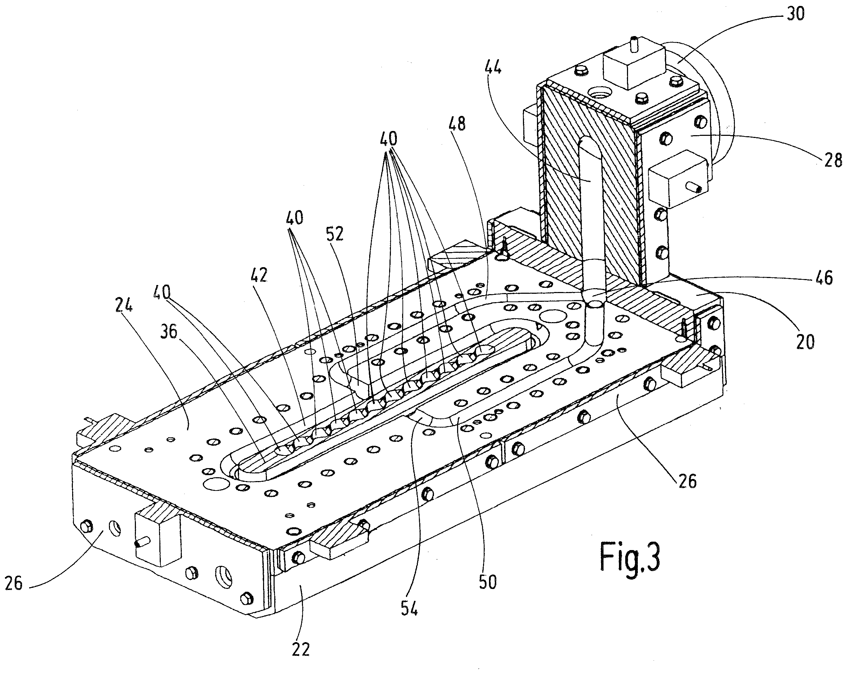

Wie Fig. 2 zeigt, hat der Extrusionskopf 2 die Form einer flachen Schale, deren Hauptteil einen rechteckigen Quader bildet. Bei der Darstellung von Fig. 1 verläuft die Schnittebene entlang der Schmalseite des Quaders. Der schalenförmige Extrusionskopf 2 ist aus zwei Schalenteilen gebildet, von denen ein oberes Schalenteil mit 20 und ein unteres Schalenteil mit 22 bezeichnet sind. Beide Schalenteile 20 und 22 liegen an einer ebenen Anlagefläche 24 aneinander und sind mittels Schrauben (nicht dargestellt) miteinander verbunden. Auf den Extrusionskopf 2 sind insgesamt zwölf Heizplatten 26 (nicht alle sichtbar und beziffert) angeschraubt. Der Anschluss der Heizplatten 26 erfolgt über deren Heizplattenanschlusselemente 27 (nicht alle beziffert). An der in Fig. 2 und 3 rechtsseitig gelegenen Schmalseite ist auf dem Endbereich des oberen Schalenteils 20 eine mit weiteren Heizplatten 26 bestückte Zuführeinrichtung 28 aufgesetzt, die in mittiger Anordnung etwa die Hälfte dieser Schmalseite überdeckt. Mit ihrem abgewinkelten oberen Ende 30 ist die Zuführeinrichtung 28 an einen (nicht gezeigten) Extruder anschließbar, von dem plastifiziertes Kunststoffmaterial dem Extrusionskopf 2 zuführbar ist, um durch Extrusion des zugeführten plastischen Materials aus Schlauchabgabeöffnungen 32, von denen in Fig. 1 lediglich eine dem einzig sichtbaren Fülldorn 12 zugeordnet sichtbar ist, den Schlauch für die Behältererzeugung zu bilden.

Wie am deutlichsten der Fig. 1 entnehmbar ist, weist das obere Schalenteil 20 einen mittig und parallel zu den Langseiten verlaufenden Aufnahmesteg 36 auf, der von einem den Eingang für die Fülldorne 12 bildenden, in der Oberseite des oberen Schalenteils 20 befindlichen Langloch 38 ausgehend, sich durch das andere Schalenteil 22 durchgehend erstreckt und innere Durchlässe 40 für die darin frei beweglichen Fülldorne 12 aufweist. In den Durchlässen 40 strömt Sterilluft ausgehend von einer Einspeisung 35 unterhalb der Halteleiste 56 im Sterilluftkanal 33 entlang den Fülldornen 12 und tritt am Steril luftaustritt 37 aus dem Extrusionskopf 2 aus, umhüllt jedoch die Fülldorne 12 in einer laminaren Strömung weiterhin und schützt sie so vor Kontaminationen. Der Aufnahmesteg 36 durchgreift einen Ringraum 42, der einen Teil einer Kanalführung für das plastifizierte Kunststoffmaterial bildet und innerhalb des unteren Schalenteils 22 mit den Abgabeöffnungen 32 in Verbindung ist. Wie Fig. 1 zeigt, sind der Ringraum 42, ebenso wie die in den Ringraum 42 einmündenden Versorgungswege der Kanalführung, gemeinsam durch gleiche Ausnehmungen in der Anlagefläche 24 vom oberen Schalenteil 20 und vom unteren Schalenteil 22 gebildet.

Die Fig. 3 zeigt die Einzelheiten der Kanalführung. Die durch die Heizplatten 26 beheizbare Zuführeinrichtung 28 weist als Eingangsteil der Versorgungswege einen Kanal in Form eines mittig und im Wesentlichen senkrecht zum oberen Schalenteil 20 verlaufenden Zuführkanal 44 auf, das zu einer Verteilstelle 46 führt, die zwischen oberem Schalenteil 20 und unterem Schalenteil 22 gebildet ist und den Eingang für die Versorgungswege bildet, die in den Ringraum 42 führen. Diese Versorgungswege sind durch zwei Versorgungskanäle 48 und 50 gebildet, die von der Verteilstelle 46 ausgehen und den Ringraum 42 auf halber Länge zangenartig umfassen und mit gebogenen Endabschnitten 52 bzw. 54 in den Ringraum 42 einmünden.

Es überrascht in besonderer Weise erfindungsgemäß eine gleichmäßige Geschwindigkeitsverteilung der Polymerschmelze an der Schlauchabgabeöffnung 32 und damit eine sehr gleichmäßige Wandstärkenverteilung des Polymerschlauchs zu erhalten, trotz des erfindungsgemäß geringen Höhenzu Längen-Verhältnisses (H, L), das nur eine kurze senkrecht verlaufende Homogenisierungsstrecke (zwischen Ringraum 42 und Schlauchabgabeöffnung 32) zur Verfügung stellt, die nur etwa 65% der Höhe H des Extrusionskopfes 2 beträgt.

Die kurz ausgebildeten Fülldorne 12, deren Länge etwa dem 3-bis 4-fachen der Höhe H des Extrusionskopfes 2 entspricht, sind mit ihrem oberen Ende an einer Halteleiste 56 angebracht. Diese ist für die getakteten Hubbewegungen an einer Halteeinrichtung 58 befestigt, die oberhalb der oberen Schale 20 des Extrusionskopfes 2 angebracht ist. Aufgrund der niedrigen Höhe H des Extrusionskopfes 2 selbst und der kurzen Baulänge der Fülldorne 12 kann auf die Anordnung von führenden Bauteilen wie Buchsen, Lager etc. innerhalb des Extrusionskopfes 2 und insbesondere innerhalb der Durchlässe 40 im Aufnahmesteg 36 verzichtet werden. Dies ermöglicht eine ungestörte Sterilluftströmung im durchgehend zylindrischen Sterilluftkanal 33, in dem sich eine laminare Strömung ausbilden kann, die sich entlang der Fülldorne 12 fortsetzt.

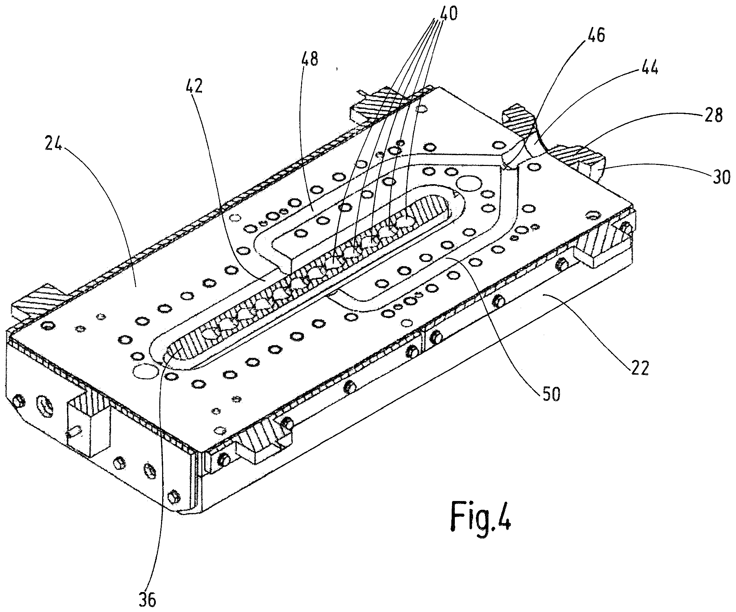

Die Fig. 4 zeigt ein weiteres bevorzugtes Ausführungsbeispiel bei dem gegenüber Fig. 3 der Zuführkanal 44 verkürzt ist und nicht senkrecht, sondern an der Verteilstelle 46 nahezu waagrecht in die Versorgungskanäle 48 und 50 einmündet. Überaschenderweise verschlechtert die gegenüber der Ausführungsform gemäß Fig. 3 weiter reduzierte senkrechte Fließwegelänge der Schmelze die oben genannte Wandstärkenhomogenität nicht. Weiterhin ist diese Ausführungsform vorteilhaft, da die Länge der gesamten Schmelzversorgungswege erheblich verkürzt ist, und das waagrechte Einmünden zu reduziertem Strömungswiderstrand und somit zu geringerem Energiebedarf führt.

Die Beheizung des Schlauchkopfes 2 und/oder der Zuführeinrichtung 28 kann alternativ zu der beschriebenen elektrischen Beheizung auch mittels anderer Methoden, beispielsweise induktivem Wärmeeintrag, erfolgen.

## Patentansprüche

1. Vorrichtung zum Herstellen und Befüllen von Behältern, bei der zumindest ein Schlauch plastifizierten Kunststoffmaterials, der aus einem Extrusionskopf (2) kommt, in eine geöffnete Form hinein extrudierbar ist, wobei mittels einer Fülleinrichtung (14), zumindest das Füllgut in den jeweiligen Behälter mittels Fülldornen (12) einbringbar ist, die zumindest im Betrieb den Extrusionskopf (2) entlang mindestens einer Reihe von Durchlässen (40) durchgreifen, wobei der Extrusionskopf (2) eine quaderförmige Schale (20, 22) aufweist und wobei die Bauhöhe (H) des Extrusionskopfes (2) parallel zur Ausrichtung des jeweiligen Fülldornes (12) gesehen kleiner ist als die Länge (L) des Extrusionskopfes (2) längs der jeweiligen Reihe der Durchlässe (40) gesehen, **dadurch gekennzeichnet, dass** die quaderförmige Schale aus mindestens einem unteren und einem oberen Schalenteil (20, 22) besteht, von denen zumindest ein Schalenteil (22) eine Kanalführung (48, 50, 52, 54) für das plastifizierte Kunststoffmaterial aufweist, die einen Ringraum (42) beinhaltet, in dessen Mitte ein Aufnahmesteg (36) angeordnet ist, der einzelne Längsaufnahmen in Form der Durchlässe (40) für den Durchgriff der jeweiligen Fülldorne (12) aufweist.

2. Vorrichtung nach Anspruch 1, **dadurch gekennzeichnet, dass** das Verhältnis von der Bauhöhe (H) des Extrusionskopfes (2) parallel zur Ausrichtung des jeweiligen Fülldornes (12) gesehen zu der Länge (L) des Extrusionskopfes (2) längs der jeweiligen Reihe der Durchlässe (40) gesehen kleiner als 0,5, bevorzugt kleiner als 0,3 und besonders bevorzugt kleiner als 0,2, ist.

3. Vorrichtung nach Anspruch 1 oder 2, **dadurch gekennzeichnet, dass** der Ringraum (42) mindestens von einem Versorgungskanal (48, 50) mit dem plastifizierten Kunststoffmaterial versorgbar ist, der hierfür mit seinem einen freien Ende (52, 54) in den Ringraum (42) und mit seinem anderen freien Ende in einen Zuführkanal (44) einmündet, der senkrecht auf dem jeweiligen Versorgungskanal (48, 50) steht.

4. Vorrichtung nach Anspruch 3, **dadurch gekennzeichnet, dass** der Ringraum (42) von mindestens zwei Versorgungskanälen (48, 50) versorgbar ist, deren freie Enden (52, 54) in den Ringraum (42) bevorzugt an dessen längeren Seiten und bevorzugt gegenüberliegend einmünden.

5. Vorrichtung nach Anspruch 3 oder 4, **dadurch gekennzeichnet, dass** der Zuführkanal (44) an einer Verteilstelle (46) waagerecht in die Versorgungskanäle (48, 50) einmündet.

6. Vorrichtung nach einem der Ansprüche 3 bis 5, **dadurch gekennzeichnet, dass** der Zuführkanal (44) Teil einer Zuführeinrichtung (28) ist, die auf einen sich über eine Schmalseite der Schale (20, 22) erstreckenden Endbereich eines oberen Schalenteils (20) aufgesetzt ist und die das obere Schalenteil (20) zumindest teilweise überdeckt.

7. Vorrichtung nach Anspruch 6, **dadurch gekennzeichnet, dass** die Zuführeinrichtung (28) mit ihrem einen freien Ende (30) an eine Zentralversorgung eines Extruders anschließbar ist.

8. Vorrichtung nach Anspruch 6 oder 7, **dadurch gekennzeichnet, dass** die beiden Versorgungswege (48, 50) zangenartig den Ringraum (42) zumindest teilweise umfassen und mit abgebogenen Endabschnitten (52, 54) in den Ringraum (42) einmünden und dass die beiden anderen freien Enden der Versorgungswege (48, 50) in die gemeinsame Verteilstelle (46) ausmünden, in die der Zuführkanal (44) der Zuführeinrichtung (28) einmündet.

9. Vorrichtung nach einem der vorstehenden Ansprüche, **dadurch gekennzeichnet, dass** der Ringraum (42) und die Versorgungskanäle (48, 50) gleichermaßen durch Ausnehmungen in den beiden Schalenteilen (20, 22) gebildet sind, die von dem mittig und parallel zu den Langseiten des Extrusionskopfes (2) verlaufenden Aufnahmesteg (36) für die jeweiligen Fülldorne (12) durchgriffen sind.

10. Vorrichtung nach einem der vorstehenden Ansprüche, **dadurch gekennzeichnet, dass** der jeweilige Fülldorn (12) mit einem vorgebbaren radialen Abstand innerhalb des jeweils zuordenbaren Durchlasses (40) im Aufnahmesteg (36) längsverfahrbar aufgenommen ist.

11. Vorrichtung nach einem der vorstehenden Ansprüche, **dadurch gekennzeichnet, dass** die Bauhöhe (H) des Extrusionskopfes (2) parallel zur Ausrichtung des jeweiligen Fülldornes (12) gesehen geringer als 20 cm, bevorzugt geringer als 15 cm, besonders bevorzugt geringer als 13 cm, ist.

12. Vorrichtung nach einem der vorstehenden Ansprüche, **dadurch gekennzeichnet, dass** die Länge der jeweiligen Fülldorne (12) geringer als 80 cm, bevorzugt geringer als 60 cm, besonders bevorzugt geringer als 40 cm, ist.

13. Vorrichtung nach einem der vorstehenden Ansprüche, **dadurch gekennzeichnet, dass** die jeweiligen Fülldorne (12) innerhalb des Extrusionskopfes (2), insbesondere in den Durchlässen (40) im Aufnahmesteg (36), zumindest im Betrieb unter Einhalten eines vorgebbaren radialen Abstandes führungsfrei angeordnet sind.

14. Vorrichtung nach einem der vorstehenden Ansprüche, **dadurch gekennzeichnet, dass** zwischen den jeweiligen Fülldornen (12) und den jeweiligen Durchlässen (40) zumindest im Betrieb eine im Wesentlichen laminare Gasströmung einstellbar ist.

## Claims

1. Device for producing and filling containers, in which at least one tube of plasticised plastic material, which exits from an extrusion head (2), can be extruded into an open mould, wherein, by using a filling device (14), at least the filling material can be introduced into the respective containers by means of filling mandrels (12) which, at least during operation, reach through the extrusion head (2) along at least one row of apertures (40), wherein the extrusion head (2) has a cuboid shell (20, 22) and wherein the overall height (H) of the extrusion head (2), viewed parallel to the orientation of the respective filling mandrel (12), is less than the length (L) of the extrusion head (2), viewed along the respective row of apertures (40), **characterised in that** the cuboid shell consists of at least one lower and one upper shell portion (20, 22), at least one shell portion (22) of which has a channel guide (48, 50, 52, 54) for the plasticised plastic material, said channel guide containing an annular space (42) in the centre of which a receiving web (36) is arranged, which has individual longitudinal receptacles in the form of apertures (40) for the respective filling mandrels (12) to reach through.

2. Device according to claim 1, **characterised in that** the ratio of the overall height (H) of the extrusion head (2), viewed parallel to the orientation of the respective filling mandrel (12), to the length (L) of the extrusion head (2), viewed along the respective row of the apertures (40), is less than 0.5, preferably less than 0.3 and especially preferably less than 0.2.

3. Device according to claim 1 or 2, **characterised in that** the annular space (42) can be supplied with the plasticised plastic material from at least one supply channel (48, 50), which for this purpose discharges with its one free end (52, 54) into the annular space (42) and with its other free end into a feed channel (44) which is perpendicular to the respective supply channel (48, 50).

4. Device according to claim 3, **characterised in that** the annular space (42) can be supplied from at least two supply channels (48, 50), the free ends (52, 54) of which discharge into the annular space (42), preferably on its longer sides and preferably opposite each other.

5. Device according to claim 3 or 4, **characterised in that** the feed channel (44) discharges horizontally into the supply channels (48, 50) at a distribution point (46).

6. Device according to one of claims 3 to 5, **characterised in that** the feed channel (44) is part of a feed device (28) which is mounted on an end region of an upper shell portion (20) extending over a narrow side of the shell (20, 22) and which at least partially covers the upper shell portion (20).

7. Device according to claim 6, **characterised in that** the feed device (28) can be connected with its one free end (30) to a central supply of an extruder.

8. Device according to claim 6 or 7, **characterised in that** the two supply paths (48, 50) at least partially surround the annular space (42) in a pincer-like manner and discharge into the annular space (42) with bent end sections (52, 54) and that the two other free ends of the supply paths (48, 50) open out into the common distribution point (46) into which the feed channel (44) of the feed device (28) discharges.

9. Device according to one of the preceding claims, **characterised in that** the annular space (42) and the supply channels (48, 50) are formed similarly by recesses in the two shell portions (20, 22), which are penetrated by the receiving web (36) for the respective filling mandrels (12), said receiving web extending centrally and parallel to the long sides of the extrusion head (2).

10. Device according to one of the preceding claims, **characterised in that** the respective filling mandrel (12) is accommodated so as to be longitudinally movable in the receiving web (36) with a predefinable radial gap within the respective associated aperture (40).

11. Device according to one of the preceding claims, **characterised in that** the overall height (H) of the extrusion head (2), viewed parallel to the orientation of the respective filling mandrel (12), is less than 20 cm, preferably less than 15 cm, especially preferably less than 13 cm.

12. Device according to one of the preceding claims, **characterised in that** the length of the respective filling mandrels (12) is less than 80 cm, preferably less than 60 cm, especially preferably less than 40 cm.

13. Device according to one of the preceding claims, **characterised in that** the respective filling mandrels (12) are arranged guide-free within the extrusion head (2), in particular in the apertures (40) in the receiving web (36), at least during operation while maintaining a predefinable radial distance.

14. Device according to one of the preceding claims, **characterised in that**, at least during operation, a substantially laminar gas flow can be adjusted between the respective filling mandrels (12) and the respective apertures (40).

## Revendications

1. Installation de fabrication et de remplissage de récipients, dans laquelle au moins un tube souple de matière plastique plastifiée, qui vient d'une tête (2) d'extrusion, peut être extrudé dans un moule ouvert, dans laquelle au moyen d'un dispositif (14) de remplissage au moins le produit de remplissage peut être introduit dans le récipient respectif au moyen de mandrins (12) de remplissage, qui, au moins en fonctionnement, pénètrent dans la tête (2) d'extrusion suivant au moins une rangée de traversées (40), dans laquelle la tête (2) d'extrusion a une coque (20, 22) parallélépipédique et dans laquelle la hauteur (H) de la tête (2) d'extrusion, considérée parallèlement à la direction du mandrin (12) de remplissage respectif, est plus petite que la longueur (L) de la tête (2) d'extrusion le long de la rangée respective des traversées considérée le long de la rangée respective des traversées (40), **caractérisée en ce que** la coque parallélépipédique est constituée d'au moins une partie (20) inférieure de coque et d'une partie (22) supérieure de coque, dont au moins une partie (22) a une canalisation (48, 50, 52, 54) pour la matière plastique plastifiée, qui est contenue dans un espace (42) annulaire, au milieu duquel est disposé une barrette (36) de réception, qui a des logements longitudinaux individuels sous la forme des traversées (40) pour la pénétration des mandrins (12) de remplissage respectifs.

2. Installation suivant la revendication 1, **caractérisée en ce que** le rapport de la hauteur (H) de la tête (2) d'extrusion, considérée parallèlement à l'orientation du mandrin (12) de remplissage respectif, à la longueur (L) de la tête (2) d'extrusion, considérée le long de la rangée respective des traversées (40), est plus petit que 0,5, de préférence plus petit que 0,3 et d'une manière particulièrement préférée plus petit que 0,2.

3. Installation suivant la revendication 1 ou 2, **caractérisée en ce que** l'espace (42) annulaire peut être alimenté en la matière plastique plastifiée au moins par un conduit (48, 50) d'alimentation, qui à cet effet débouche par l'une de ses extrémités (52, 54) libres dans l'espace (42) annulaire et par son autre extrémité libre dans un conduit (44) d'apport, qui est perpendiculaire au conduit (48, 50) d'alimentation respectif.

4. Installation suivant la revendication 3, **caractérisée en ce que** l'espace (42) annulaire peut être alimentée par au moins deux conduits (48, 50) d'alimentation, dont les extrémités (52, 54) libres débouchent dans l'espace (42) annulaire, de préférence sur ses grands côtés et en étant de préférence opposés.

5. Installation suivant la revendication 3 ou 4, **caractérisée en ce que** le conduit (44) d'apport débouche en un point (46) de répartition horizontalement dans les conduits (48, 50) d'alimentation.

6. Installation suivant l'une des revendications 3 à 5, **caractérisée en ce que** le conduit (44) d'apport fait partie d'un dispositif (28) d'apport, qui est posé sur une région d'extrémité, s'étendant sur un petit côté de la coque (20, 22), d'une partie (20) supérieure de la coque et qui recouvre au moins en partie la partie (20) supérieure de la coque.

7. Installation suivant la revendication 6, **caractérisée en ce que** le dispositif (28) d'apport peut être raccordé par l'une de ses extrémités (30) libres à une alimentation centrale d'une extrudeuse.

8. Installation suivant la revendication 6 ou 7, **caractérisée en ce que** les deux voies (48, 50) d'alimentation enserrent au moins en partie l'espace (42) annulaire à la manière d'une pince et débouchent dans l'espace (42) annulaire par des tronçons (52, 54) d'extrémité coudés et **en ce que** les deux autres extrémités libres des voies (48, 50) d'alimentation débouchent au point (46) de répartition commun, lequel débouche dans le conduit (44) d'apport du dispositif (28) d'apport.

9. Installation suivant l'une des revendications précédentes, **caractérisée en ce que** l'espace (42) annulaire et les conduits (48, 50) d'alimentation sont formés dans les deux parties (20, 22) de la coque par des évidements, dans lesquels pénètre la barrette (36) de réception, s'étendent au milieu et parallèlement au grand côté de la tête (2) d'extrusion, des mandrins (12) de remplissage respectifs.

10. Installation suivant l'une des revendications précédentes, **caractérisée en ce que** le mandrin (12) de remplissage respectif est reçu, avec possibilité de se déplacer longitudinalement, à une distance radiale pouvant être donnée à l'avance dans la traversée (40) pouvant être associée respectivement de la barrette (36) de réception.

11. Installation suivant l'une des revendications précédentes, **caractérisée en ce que** la hauteur (H) de la tête (2) d'extrusion, considérée parallèlement à l'orientation du mandrin (12) de remplissage respectif, est plus petite que 20 cm, de préférence plus petite que 15 cm, d'une manière particulièrement préférée plus petite que 13 cm.

12. Installation suivant l'une des revendications précédentes, **caractérisée en ce que** la longueur des mandrins (12) de remplissage respectifs est plus petite que 80 cm, de préférence plus petite que 60 cm, d'une manière particulièrement préférée plus petite que 40 cm.

13. Installation suivant l'une des revendications précédentes, **caractérisée en ce que** les mandrins (12) de remplissage respectifs sont disposés sans guidage dans la tête (2) d'extrusion, notamment dans les traversées (40) de la barrette (36) de réception, en conservant au moins en fonctionnement une distance radiale pouvant être donnée à l'avance.

14. Installation suivant l'une des revendications précédentes, **caractérisée en ce qu'**un courant de gaz sensiblement laminaire peut au moins en fonctionnement être réglé entre les mandrins (12) de remplissage respectifs et les traversées (40) respectives.
